# EUROPEAN PATENT SPECIFICATION

(11) **EP 3 914 567 B1**
(45) Date of publication and mention of the grant of the patent: **18.03.2026**
(21) Application number: 20701473.9
(22) Date of filing: 24.01.2020
(51) Int. Cl.: C04B 28/02, C04B 28/04, C04B 28/06, C04B 28/14

(54) **BUILDING MATERIAL**
BAUMATERIAL
MATÉRIAU DE CONSTRUCTION

(30) Priority: 25.01.2019 EP 19153809
(43) Date of publication of application: 01.12.2021
(73) Proprietor: PRTC NV, 2830 Tisselt (BE)
(72) Inventor: WU, Xiao, 1932 Sint Stevens Woluwe (BE); OPSOMMER, Ann, 2830 Tisselt (BE)
(74) Representative: Etex Services NV - Etex IPSC
(86) International application number: PCT/EP2020/051771
(87) International publication number: WO 2020/152335

(56) References cited:
- WO-A1-99/46215
- JP-A- S5 727 958
- JP-A- S5 727 959

## Description

### FIELD OF THE INVENTION

The present invention relates to a building material composition, in particular a gypsum-based composition providing a building material having a good fire resistance, with improved mechanical strength and thermal stability at high temperature; and to methods for the manufacture thereof; and to fire-resistant building elements comprising this material.

### BACKGROUND OF THE INVENTION

In most building codes, requirements for building materials are incorporated that relate to both reaction to fire and resistance to fire.

The reaction to fire is the contribution of a material, applied in a construction (e.g. a building, a vessel, ...) to the spread of the fire. Sometimes the emission of smoke and toxic gases in case of fire, is seen as part of the reaction to fire.

The resistance to fire of a building element is a measurement of the time that this element fulfils its function in case of a standardized fire. For a good fire resistance thermal stability, thermal insulation and heat capacity of the materials in the building element play an important role.

Fire resistance of construction elements is measured in specialized test laboratories. In these laboratories, the construction elements are tested and evaluated to the criteria defined in corresponding technical standards (e.g. ISO 834, EN 1363 and dependent standards, ASTM 119, ...). According to these standards the function of a fire resistant structural element, when exposed to a theoretical fire curve, is evaluated as the time in minutes, during which the element fulfils the requirements imposed to its stability, integrity (tightness to flames or smoke), and thermal insulation, to the extend these requirements are applicable to the construction element. Very often this time period is afterwards classified in comparison to the standard requirement in the building codes.

Among the materials used in the field of construction, gypsum is of particular interest regarding its use in fire resistant constructions. This interest is due not only to the fact that it is incombustible, but also to the fact that the heating of a gypsum containing construction element when exposed to a fire is remarkably slowed down thanks to the considerable endothermic effect that takes place when this material is subjected to heat. When heating the gypsum (or calcium sulfate dihydrate (CaS0₄.2H₂O)), it first loses the water present in its pores, and gradually dehydrates to turn into plaster (or calcium sulfate hemihydrate (CaSO₄.½₂H₂0)) and later to anhydrite (CaSO₄).

The amount of energy consumed during dewatering of gypsum and the evaporation of this water gives a gypsum-based product some excellent properties to act as fire protection for underlying materials.

In practice, however, the use of gypsum as a base material for fire-resistant building elements has certain disadvantages.

This is mainly due to the loss of mechanical stability of the gypsum on heating. During its dehydration, gypsum loses part of its mechanical strength and it shrinks, causing cracks to appear. These cracks create paths for increased heat and smoke transfer, or even the complete loss of its function, when large parts of the building material collapse.

Another significant disadvantage is the high density of a gypsum matrix which is typically in the range 1000 to 1350 kg/m³. For the construction of many building elements the weight of the construction material plays an important role (e.g. in false ceilings, ducts, high partition walls, ...). Too much weight is a major drawback, especially for installation and transportation.

In order to overcome the problem of high density of gypsum, various methods have been described for the manufacture of gypsum fire-rated building elements. For example, it has already been described to lighten a matrix of gypsum using hydrated calcium silicates, see FR 2227241 and JP 7-25656.

Particular hydrated calcium silicates are xonotlite and tobermorite, which can be obtained by the hydrothermal synthesis of an aqueous suspension of lime and silica as described in US 3501324, US 3679446, US 4162924 and US 4298386.

WO 99/46215 describes a gypsum matrix having incorporated therein porous, approximately spherical, hydrated calcium silicate aggregates having a mean diameter of 40 to 150 µm which have an internal part in which the crystals form loosely entangled aggregates and an external layer in which the crystals are entangled more tightly than in the internal part. These hydrated calcium silica aggregates are prepared by hydrothermal synthesis in a stirred medium using an ultrasonically pretreated aqueous lime suspension and an aqueous silica suspension. An alternative process for preparing said hydrated calcium silicate aggregates involves hydrothermal synthesis in a stirred medium, using an aqueous lime and silica suspension, the lime suspension being obtained beforehand by hydration in the presence of 0.2 to 2 % by weight of sulfate (e.g. calcium sulfate, magnesium sulfate or a mixture thereof) with respect to the weight of lime.

Using the process of WO 99/46215 makes it possible to manufacture gypsum-based building elements having both a high fire resistance and a reduced density. The particles described in WO 99/46215 provide the building element superior fire resistance at an equal density compared to that conferred by other lightening fillers of the prior art.

However, the gypsum-based products of WO 99/46215 have rather poor mechanical properties and high thermal shrinkage at elevated temperatures. The poor mechanical properties of the building product are an issue especially when the product is not provided with facers.

### SUMMARY OF THE INVENTION

Therefore, it is an object of the present invention to provide lightweight fire-resistant gypsum-based products with improved mechanical properties and lower thermal shrinkage.

It is a further object of the present invention to modify the internal structure of hydrated calcium silicate aggregates (xonotlite or tobermorite particles), so that the building material of current invention can reach lower density, meanwhile maintaining the same or an improved performance compared to the prior art products.

Accordingly, the present invention provides a building material composition comprising a gypsum matrix and porous, approximately spherical, hydrated calcium silicate aggregates incorporated into the gypsum matrix, wherein the hydrated calcium silicate aggregates are present in a range of between 0.5 and 85 % by weight of total weight of the composition.

The porous calcium silicate aggregates have an internal part in which the crystals are loosely entangled and distributed rather uniformly and an external layer in which the crystals are entangled more tightly than in the internal part and are further characterized in that the hydrated calcium silicate aggregates are capable of being obtained by hydrothermal synthesis in a stirred medium, using an aqueous lime suspension and silica suspension, said aqueous lime suspension and silica suspension being obtained in the presence of 0.1 to 2% by weight, preferably 0.1 to 1% by weight of sulfate with respect to total weight of lime and silica used in the production of the porous calcium silicate aggregates, and in the presence of 0.1 to 2% by weight, preferably 0.1 to 1% by weight of alkali hydroxides with respect to total weight of lime and silica used in the production of the porous calcium silica aggregates. In the present invention the lime can be either hydrated lime (Ca(OH)₂) or quick lime (CaO).

Due to the combined use of sulfate and alkali hydroxides in the amounts specified above in the preparation of the lime and silica suspension, improved porous calcium silicate aggregates are obtained.

Compared to using solely sulfates in the preparation of the lime suspension as described in WO 99/46215, the obtained calcium silicate particles are lighter and have a more regular and round shape. Without being bound to this theory, the inventors believe that the combined use of sulfate and alkali hydroxides in the preparation of the lime and silica suspension influences the initial calcium silicate crystal formation which in turn leads to smoother and lighter particles. Compared to the reference calcium silicate hydrates of WO 99/46215, which have typically an apparent density of the dried powder of 100 to 130 g/l, the calcium silicate hydrates made according to the present invention by the combination of sulfate and alkali hydroxide have an apparent density of dried material in the range 80 to 110 g/l. This is a remarkable reduction in density.

It is a further object of the present invention to simplify the production process of the calcium silicate crystal aggregates formation, resulting in improved industrial applicability. The inventors have further found that the that the combined use of sulfate and alkali hydroxides in the preparation of the lime and silica suspension positively influences the industrial manufacturing process of these porous calcium silicate aggregates. The total preparation time has been reduced which saves costs and energy, the process efficiency has increased and overall the industrial process has become much more stable. Furthermore, the use of a sonoreactor (for ultrasonic treatment) has become superfluous which has reduced the variability of the porous calcium silicate aggregates reaction significantly.

As shown in the Examples below; the presence of porous particles of hydrated calcium silicate of particular structure, according to this invention, in the building material composition provides the building material with improved mechanical properties such as mechanical strength and reduced thermal shrinkage and hence improved thermal stability at high temperature (such as at 950°C) while still maintaining optimal fire resistance. The improved mechanical properties of the building materials are linked to the improved features of the porous calcium silicate aggregates (rounder, more homogeneous, lighter,...). These features are mainly caused by the production process and are rather difficult to characterize in terms of standard parameters.

Another advantage of the composition according to the invention is that it can be processed by known installations, such as Hatcheck process, gypsum board process, flow-on process, filter press process, Magnani process, casting process and spray process.

This makes it possible to manufacture building materials for fire resistant construction elements having at the same time a high fire resistance, a reduced density, good mechanical strength and high thermal stability at high temperature.

In accordance with the current invention, part of the gypsum binder can be replaced by cement to improve water resistance and high temperature stability. The cement can be selected from ordinary Portland cement (OPC) CEM I to CEM V, aluminate cement and sulfo-aluminate cement, or any combination thereof.

In another aspect, the present invention provides porous, approximately spherical, hydrated calcium silicate aggregates for use in a building material composition and a process for the manufacturing thereof.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description which illustrates, by way of example, the principles of the invention. This description is given as example only, without limiting the scope of the invention.

### DETAILED DESCRIPTION

The present invention will be described with respect to particular embodiments.

It is to be noticed that the term "comprising", as used herein, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

The terms "plaster board" and "gypsum board" as used herein are interchangeably and refer to a panel or board comprising a gypsum core, obtainable from a plaster slurry as described herein. Accordingly, the term "plasterboard" refers to a board or panel which is obtainable via the setting (hydration and hardening) of plaster. The term "board" or "panel" as used herein refers to any type of wall, ceiling or floor component of any required size.

The term "fiber" means a material form characterized by a high ratio of length to diameter, preferably a length to diameter ratio of at least 50.

When reference is made to weight percentage (wt%), this is to be understood, unless differently specified, as the weight of the component expressed as percentage over the total weight of the composition in which the component is present.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The present invention relates to a gypsum material useful for application in the field of fire protection and methods of manufacturing this material, wherein part of the gypsum binder may be replaced by cement as binder.

In order to manufacture such a gypsum-based material, a hydraulic setting composition containing plaster and optionally cement, water and porous, substantially spherical aggregates of hydrated calcium silicates and optionally fibres and other additives, homogeneously dispersed in the mix, is prepared.

In this composition, the content of aggregates of hydrated calcium silicates is in the range 0.5 to 85 wt% of total weight of composition and preferably in the range 2 to 50 wt%, most preferably 5 to 30 wt% of the composition.

In an alternative embodiment of this composition, the content of aggregates of hydrated calcium silicates is in the range 0.05 to 10 wt% of total weight of composition and preferably in the range 0.5 to 7.5 wt%, more preferably 0.75 to 5 wt%, most preferably 1 to 2.5 wt% of the composition. The amount of water in the composition is such that the water/solid weight ratio is between 0.55 and 20.

After mixing this composition it is then shaped, allowed to set, dried and finished.

Plaster is also known in the art as hydratable calcium sulfate and refers to a partially dehydrated gypsum of the formula CaSO₄·xH₂O, where x can range from 0 to 0.5. When referring specifically to the hemihydrate form (CaSO₄•%_{½}H₂O), the term "calcium sulfate hemihydrate" is used.

The term "dry weight" when referred to plaster in a plaster composition, refers to the weight of the calcium sulfate including hydration water (i.e. the xH₂O of the above formula), but excluding the gauging water in the composition. Similarly, the "dry weight" of the settable mixture refers to the total dry weight of the components in the mixture, excluding free water.

Plaster can be obtained via the calcination of gypsum (i.e. calcium sulfate dehydrate or CaSO₄•2H₂O), i.e. the thermal treatment of gypsum in order to remove (a part of) the combined water. For the preparation of plaster, natural or synthetic gypsum may be used. Natural gypsum may be obtained from gypsum rock or gypsum sand. Synthetic gypsum typically originates from flue gas desulphurization (FGD), phosphonic acid production, citric acid production and others. Gypsum obtained from FGD is also known as desulphogypsum (DSG).

The mixture comprising the hydratable calcium sulfate is also referred to herein as "settable mixture" or "plaster slurry".

In the setting process, the hydratable calcium sulfate is transformed to gypsum (calcium sulfate dihydrate). Accordingly, the material of the present invention comprises gypsum.

The settable mixture comprises 10 wt% to 95 wt% of binder composed of hydratable calcium sulfate and optionally cement, more preferably from 50 wt% to 90 wt%. Purity of the hydratable calcium sulfate is typically above 90 wt%, more preferably at least 95 wt%.

It will be clear to the skilled person that the settable mixture also comprises water. The water is partially consumed in the transformation of the hydratable calcium sulfate to gypsum. Most of the remaining water is then removed via drying, such that the matrix comprises (almost) no free water (i.e. water that is not hydration water). Drying is typically performed in a drier at elevated temperature; preferably the drier temperature is set between 100°C and 250°C. The actual temperature of the plasterboard during drying preferably does not exceed 100°C. Drying typically occurs after the setting of the panel. More particularly, the rehydration rate is preferably as close as possible to 100%, preferably at least 97%.

According to the method of the invention, hydrated calcium silicate aggregates having an internal portion wherein the crystals are very loosely entangled and an outer layer wherein the crystals are more closely entangled than in the inner part are added. The crystals preferably have an acicular form and are preferably xonotlite crystals.

The said crystal aggregates advantageously have a mean diameter of between 20 and 150 microns, preferably between 40 and 80 microns, and the outer layer advantageously has a thickness of between 4 and 10 microns, preferably between 4 and 6 microns.

For the synthesis of these hydrated calcium silicate aggregates, a silica suspension is mixed with a suspension of lime in a CaO/SiO₂ molar ratio advantageously between 0.8 and 1.2, wherein the lime can be either hydrated lime (Ca(OH)₂ or quick lime (CaO). A preferred water/solids ratio is between 11/1 and 15/1.

The suspension of lime and silica is obtained in the presence of 0.1 to 2% by weight of sulfate with respect to the total weight of lime and silica, and in the presence of 0.1 to 2% by weight of alkali hydroxides with respect to the total weight of lime and silica.

Said sulfate is advantageously chosen from calcium sulfates, magnesium sulfates and their mixtures and is preferably calcium sulfate. The preferred amount of sulfate to be added in the preparation of the lime and silica suspension is from 0.1 to 1 wt%.

Alkali hydroxides such as lithium hydroxide, sodium hydroxide and potassium hydroxide or mixtures thereof are also added to the lime and silica suspension. Preferred amount ranges for said alkaline hydroxide are from 0.1 to 1 wt%.

The hydrothermal synthesis of the calcium silicate aggregates is generally carried out with stirring (in the order of 30 rpm to 400 rpm depending on the dimensions of the reactor) at a temperature in the order of 160°C to 250°C and at a water vapor pressure advantageously between ca 5 to 40 bar.

It will be clear to the skilled person that all the embodiments related to the synthesis of the hydrated calcium silicate aggregates are valid for all aspects of the present invention.

The hydraulic setting composition of the current invention may comprise fibers, preferably reinforcing fibers.

In the context of the present invention, the term "reinforcing fibers" means fibrous material capable of reinforcing gypsum-based materials or building elements and capable of increasing their resistance to fire by limiting or delaying their cracking during exposure to fire. The fibers can be mineral or organic, natural or synthetic.

According to a preferred embodiment, at least a portion of these reinforcing fibers are glass fibers. The reinforcing fibers may, for at least a portion, be present as individual fibers dispersed in the hydraulic setting composition. Such individual fibers may, for example, have an average length of between 2 and 20 mm, preferably between 4 and 12 mm. These individual fibers may be present in the hydraulic setting composition in an amount of between 0.3 and 10 % by weight with respect to the total composition and preferably between 1.0 and 5 % by weight.

The reinforcing fibers may also, for at least a portion, be present in the form of a web, net or woven or non-woven fabric, such as to make a facer.

A combination of individual reinforcing fibers dispersed in the hydraulic setting composition and a web, net or reinforcing fabric incorporated in said composition is also possible.

According to another advantageous embodiment, the reinforcing fibers consist, at least in part, of cellulose fibers or of a mixture of cellulose fibers and glass fibers.

Advantageously, the cellulose fibers are predispersed in water before being added to the hydraulic composition.

A particularly preferred composition comprises about 1 % by weight of cellulose fibers and about 2 % by weight of glass fibers, the % by weight being expressed relative to total solids in the composition.

The addition of cellulose fibers has the advantage of further improving the mechanical properties of the building element without deteriorating its fireproof properties. Further, the construction element has less crack-development during fire exposure when cellulose fibers have been incorporated therein.

The hydraulically setting composition also comprises functional additives, such as, for example, foaming agents, fluidizers, fillers, setting accelerators/retarders, pigments, anti-sagging agents, rheology controllers, endothermic additives, rheological agent, water repellents, as long as they are compatible with the other ingredients and with the application of the resulting material, in an amount of 0.1 to 5% by weight of total composition.

Further the composition may optionally contain functional fillers which may be selected from light weight fillers such as expanded perlite, exfoliated vermiculite, expanded clay, foamed glass, pumice, hollow ceramic sphere of fly ashes from power plant; and endothermic fillers such as aluminium hydroxide, magnesium hydroxide, calcium hydroxide, ettringite, and their carbonates, or combination thereof.

One additive is a cellulose-ether. Further Improvements in mechanical properties can be obtained by addition of said cellulose-ethers. The cellulose-ethers are added in amount in a range of 0.1 to 1 wt% by weight based on the total hydraulically setting composition. Cellulose ethers are water-soluble polymers with a cellulose backbone and ether containing substituents. Examples of suitable cellulose-ethers are methyl cellulose, ethyl cellulose, hydroxyethyl cellulose, hydroxypropyl cellulose, carboxymethylcellulose. Particularly suitable cellulose ethers are methylcellulose and hydroxypropyl methylcellulose, commercially available from Dow under the tradename METHOCEL and ethylcellulose, commercially available from Dow under the tradename ETHOCEL.

When cellulose ethers are added to the composition of the present invention the amount of calcium silicate aggregates can generally be diminished and still maintain the mechanical properties at the same level. For example, if 0.5 wt% cellulose ether is added then the content of calcium silicate aggregates can be reduced by 70%.

Further the hydraulically setting composition according to this invention can also contain certain amounts of other types of binder materials typically used in the building industry such as different types of cement. These additional binder elements such as cement, if present, are present in an amount up to 90% by weight of total binder, preferably up to 50 % by weight of total binder, most preferably between 10 and 20 % by weight.

It is preferred that when the xonotlite aggregates are added to the hydraulic setting composition, they are in a dispersed form in an aqueous suspension. This allows them to better withstand the shear forces generated in the mixer, especially during the preparation of the composition. In this way, the xonotlite aggregates remain mostly intact and give the material the desired microstructure.

The aqueous suspension may comprise some or all of the amount of water required for processing. Depending on the synthesis conditions, the hydrated calcium silicates may be xonotlite crystals, tobermorite crystals or possible other hydrated calcium silicate crystals or mixtures thereof.

In particular embodiments, the gypsum matrix may comprise starch. The starch may be natural starch; or a starch derivative such as a substituted starch. The starch may be derived from e.g. potato, tapioca, or corn. Starches are often used to improve the adhesion of a facer to the gypsum matrix.

The material of the present invention works in a large range of densities, depending on the envisaged use. In particular embodiments, typically the dry bulk density of the product varies between 500 kg/m³ and 1500 kg/m³; preferably between 700 kg/m³ and 1200 kg/m³.

The material according to the invention has several applications in the field of fire protection.

The material according to the invention is suitable for filling cavities in structures, as for example, fire doors.

The material according to the invention finds an important application as a base material for building elements and more particularly for fireproof building elements.

The present invention further relates to a fireproof construction element comprising a material as described above. Such building elements are, for example, coatings, partitions, screens, column sheaths, beam sheaths, ceiling tiles, manholes, ducts, ventilation and smoke extraction ducts, casings for electric cables, etc.

Further the material of the present invention can also be used for thermal and/or acoustic insulation purposes.

The building material according to the present invention may contain on one or both of its opposing surfaces a facer to further improve fire resistance and mechanical strength. Both faces of the gypsum material may be provided with the same type of liner, or a different type.

Said facing material may be made by glass fibers, cellulose fibers or synthetic fibers, or combination thereof, in woven or non-woven fabric.

The term "non-woven fabric" means a fabric-like material made from fibers, bonded together by chemical, mechanical, heat or solvent treatment. "Non-woven fabrics" can define sheets supports or web structures bounded together by entailing fibers or filaments. Non-woven fabrics can be prepared according to well-known processes such as water laying (wet-laying), melt-blowing, spin laying, carding, and air laying.

In preferred embodiments, the fibers are chemically bonded, more particularly via a binder. The binder may be organic or inorganic. In preferred embodiments, the binder is an organic binder, more particularly a polymer-based binder. Suitable binders are known in the art. Preferably, a latex binder is used selected from the group consisting of vinyl acrylic, ethylene polyvinyl acetate, polyvinyl acetate, styrene butadiene, styrene acrylic, acrylic, or mixtures thereof. Particularly preferred are vinyl-acrylic copolymers.

In addition to the binder, the non-woven fabric may further comprise one or more fillers, preferably mineral fillers. Suitable fillers include calcium carbonate, calcium sulfate (anhydrite, hemihydrate, or dihydrate), clay (e.g. kaolin), sand, talc, mica, glass powder, titanium dioxide, magnesium oxide, alumina, alumina trihydrate, silica, silicate, and carbon. The dimensions of the filler are typically such that it substantially penetrates into the fibrous mat. For example, the mineral filler could be particles that have a volume-basis median particle size (d₅₀) from about 0.1 µm to about 10 µm, preferable about 0.5 µm to 5 µm. The particle size is an equivalent spherical diameter as measured with laser diffraction, such as described in ISO 13320:2009. In such method, the particles are dispersed in air (dry form) and a laser is passed through the dispersed particles. The intensity of the scattered light at different angles is collected. Preferably, the span of the particle size distribution is between 1 and 3.

The non-woven fabric may further be provided with various additives such as water resistant or water repellent agents, biocides, fire resistant agents and/or pigments, as known in the art.

The non-woven fabric is preferably made of fibers having a length from 1.0 mm to 40 mm. Preferably, the average length of the fibers can vary from 10 mm to 38 mm. The fibers may be a mixture of fibers having different length.

The fibers of the non-woven fabric can be made of various materials. The fibers in the fabric can all be made of the same material, or the fabric may contain a mixture of fibers made from different materials. The fibers are preferably selected from mineral fibers, organic fibers, synthetic (polymeric) fibers, and mixtures thereof.

In preferred embodiments, the non-woven fabric comprises mineral fibers, preferably glass fibers. The use of glass fibers allows for a better fire resistance of the board. In particular embodiments, the non-woven fabric may comprise at least 30 wt% of glass fibers, based on the total fiber weight of the fabric. Preferably, the non-woven fabric comprises at least 50 wt%, at least 75 wt%, or even at least 90 wt% of glass fibers, based on the total fiber weight of the fabric. The glass fiber diameter can vary within broad ranges, for example from 2.0 µm to 40.0 µm. In particular embodiments, glass fibers have an average diameter below 40µm, preferably below 25µm, more preferably from 8 µm to 25µm. Mixtures of fibers of different fiber diameters (and length) can be used.

In particular embodiments, the non-woven fabric comprises synthetic fibers. Examples of suitable synthetic fibers include polyester fibers, polyamide fibers, polyaramide fibers, polyethylene fibers, and polypropylene fibers. Preferably, polyester fibers are used.

In particular embodiments, the non-woven fabric comprises organic fibers. Examples of suitable organic fibers may be cellulose based fibers, such as flax, wood pulp, cotton, sisal, abaca, viscose, rayon and/or lyocell fibers.

In particular embodiments, the non-woven fabric may comprise a combination of mineral fibers, synthetic organic fibers, and organic fibers as described above. In specific embodiments, the fabric may comprise a combination of glass fibers, cellulose fibers, and polyester fibers. Such fabrics can provide an improved wet tensile strength, better bonding between inner ply and gypsum core and excellent fire resistance properties.

The non-woven fabric may comprise one or more layers or plies of non-woven material. In particular embodiments, the non-woven fabric is made of a single ply of non-woven material.

In other embodiments, the non-woven fabric may comprise an inner ply and an outer ply. The "inner ply" is the ply that contacts the gypsum core of the board. The "outer ply" is the ply that is or is intended to be farther from the gypsum core, i.e. located in the external side of the plasterboard and thus facing away from the core. Accordingly, the outer ply typically is in contact with the exterior and can be painted, covered with tiles or finished in another usual way.

These two plies may have the same composition or a different composition. Preferably the outer and inner ply have different compositions. Such a two ply configuration provides the advantage of allowing to design an asymmetrical fibrous mat with one outer ply being optimized for safer handing and compatibility with finishing and adhesive products, and with an inner ply being optimized for an improved fire resistance and strong and durable mechanical bonding with the gypsum core.

In particular embodiments, the outer ply is made of at least 90 wt% cellulose fibers and/or synthetic fibers (based on the total fiber weight of the outer ply); whereas the inner ply is made of at least 35 wt% glass fibers (based on the total fiber weight of the inner ply). In particular embodiments, the inner ply may comprise at least 50 wt%, at least 75 wt%, at least 85 wt%, or even at least 90 wt% of glass fibers (based on the total fiber weight of the inner ply).

Thickness of the building material can be above 5 mm, preferably ranging from 10 mm to 500 mm. The board typically has a rectangular shape, although other shapes may also be envisaged.

Practical examples according to the invention are illustrated in more detail below in comparison with the state of the art.

### EXAMPLES

### Comparative Example 1:

Composite board for passive fire protection based upon gypsum and hydrated calcium silicate according to the state of the art

In a first step, a xonotlite slurry was prepared (Table 1). In an initial slaking step, CaO was converted to Ca(OH)₂ by mixing CaO in water at 60°C to which gypsum was added applying a water/CaO-ratio of 12. After adding sand and a second amount of water, the mixture was transferred to a stirred autoclave and hydrothermally treated at 210°C for 4 hours, applying a heating rate of 2h until 210°C and stirring at 200rpm, followed by natural cooling.

**Table 1**

| | **wt (g)** | **dry wt%** | **wet wt%** |
|---|---|---|---|
| **Slaking water** | 915 | - | 38.1 |
| **Gypsum** | 0.54 | 0.3 | 0.0 |
| **Lime** | 76.68 | 47.1 | 3.2 |
| **Silica** | 85.6 | 52.6 | 3.6 |
| **Extra water** | 1325 | - | 55.1 |

To this xonotlite slurry, the following components were added : cellulose fibres, chopped glass fibres, shrinkage reducing agents (microsilica and wollastonite). This slurry was added to a mixture of plaster, retarder and water and mixed in high shear mixing process before casting the mixture in molds to produce slabs. The applied water/solid ratio was 1. The general composition of the casted mixture was as follows: plaster (86.85%), Plastretard-PE (0.25%), cellulose (0.5%) , chopped glass fibres (2%), shrinkage reducing additives (4.4%) and xonotlite (6%).

After setting, demolding and drying, boards are obtained with properties as given below in Table 2.

**Table 2**

| | **Density (kg/m³)** | **Bending strength (MPa)** | **Bending energy (J/m²)** | **Thermal shrinkage at 950°C (length) (%)** | **Rf-value in partition conditions for 20mm slab (min.)** |
|---|---|---|---|---|---|
| **Reference slab** | 864 | 6.2 | 570 | 5.2 | 36.5 |

These properties were tested according to EN-norms or ISO standard.

The bending strength was measured according to EN 12467.

The thermal shrinkage was determined at 950°C according to EN 1094-6.

The fire resistance-values ('Rf-values') were measured in partition conditions simulating the ISO 834-norm in an electrical kiln. In this test an ISO-heating curve is applied on one side of a board and the temperature evolution at the other side ('cold side') is registered with a K-type of thermocouple.

### Example 2: (not according to the invention)

Composite board for passive fire protection based upon gypsum and hydrated calcium silicate according to the present invention

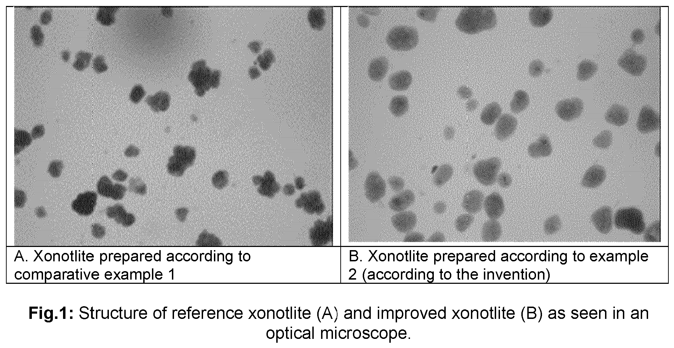

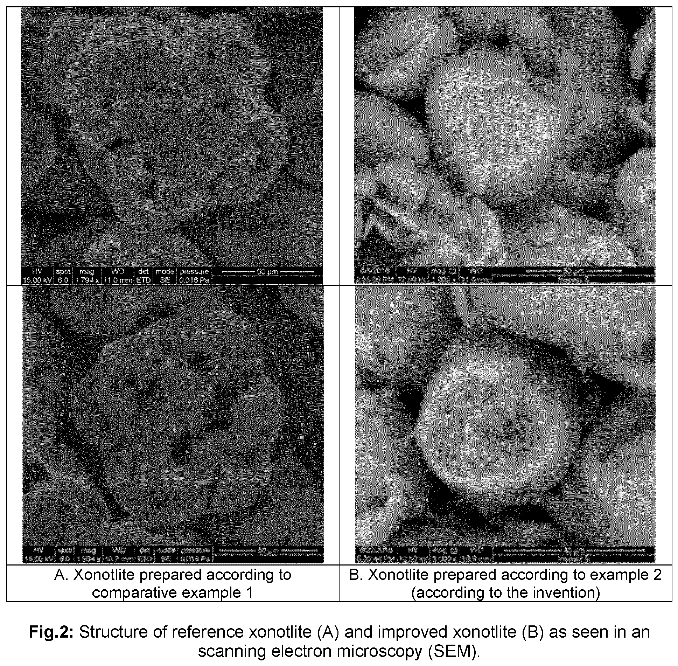

A xonotlite slurry was prepared as in the comparative example 1 above, though besides 0.3 wt% gypsum, also 0.3 wt% NaOH was added to the lime and silica suspension. Due to the combined addition of gypsum and NaOH, a better and lighter xonotlite was obtained. An example of the structure of this xonotlite prepared in example 2 as well as the reference xonotlite prepared according to comparative example 1 are given in Figure 1 (optical microscope) and Figure 2 (Scanning Electron Microscope (SEM)). Figure 1 and Figure 2 clearly show that the combination of gypsum and NaOH as additives in the xonotlite formation leads to xonotlite particles that are rounder, have better homogeneity (internal structure as well as overall appearance) and are lighter (apparent density is lower and the particles allow more light to pass in microscopical evaluations). These features are caused by the production process and are rather difficult to characterize in terms of standard parameters but ultimately, as shown by comparing the properties in Table 2 and Table 3, they lead to better properties for the end-products containing the xonotlite prepared according to the present invention. The xonotlite slurry was further used to produce fire protection boards using the same general composition as described in example 1. This board, incorporating the xonotlite prepared according to example 2, has the properties listed below in Table 3 and shows higher strength and bending energy as well as lower thermal shrinkage compared to the properties of the reference board of comparative example 1 listed in Table 2 above.

**Table 3**

| | **Density (kg/m³)** | **Bending strength (MPa)** | **Bending energy (J/m²)** | **Thermal shrinkage at 950°C (length) (%)** | **Rf-value in partition conditions for 20mm slab (min.)** |
|---|---|---|---|---|---|
| **Board 1** | 870 | 7.2 | 705 | 4.3 | 36.6 |

### Microscopical evaluation

As said, the xonotlite particles are difficult to characterize in terms of standard parameters. Hence, the inventors have developed an in-house microscopical evaluation method to provide a relative measurement of the roundness and lightness. In this in-house method, the particles are suspended in water, put on a glass microscopy slide and evaluated with an optical microscope. To be able to compare different measurements to each other, all settings of the microscope are kept the same (brightness of the lamp, contrast, magnification, ...).

The roundness of the particles is evaluated by measuring the actual perimeter of the particles and dividing this value by the perimeter of a fitted circle of the same surface. The closer this value comes to 1, the more round the particles are.

The lightness or the transparency of the particles is evaluated by looking at the pixel density of the particles at a given grade of illumination (pixels/area). The higher the value, the more light is allowed to come through and the lighter/more transparent the particles are. This measurement also gives an idea about the density of the particles, when the transparency is higher the particles are less dense.

The xonotlite particles prepared according to comparative example 1 and example 2 were evaluated according to this method, the properties are listed in Table 4 below. It is clear that the xonotlite particles formed via the combined action of gypsum and NaOH (according to example 2) are rounder and lighter than the reference xonotlite particles of comparative example 1.

**Table 4**

| **Sample** | **D50 microscope (in micron)** | **Transparency** | **Roundness** |
|---|---|---|---|
| **Comparative Example 1** | 71 | 96 | 1.68 |
| **Example 2** | 42 | 136 | 1.23 |

### Example 3:

Composite board for passive fire protection based upon gypsum and hydrated calcium silicate according to the present invention with the addition of methyl-cellulose

A xonotlite slurry was made according to Example 2 and this xonotlite was used in the following formulation : plaster (90.75 wt%), xonotlite (2 wt%), methyl cellulose (0.1 wt%), cellulose (0.5 wt%), chopped glass fibres (2 wt%), shrinkage reducing agents (4.4 wt%) and Plastretard-PE (0.25 wt%). The mixture was processed as described in examples 1 and 2 to form boards with the properties listed below in Table 5.

**Table 5**

| | **Density (kg/m³)** | **Bending strength (MPa)** | **Bending energy (J/m²)** | **Thermal shrinkage at 950°C (length) (%)** | **Rf-value in partition conditions for 20mm slab (min.))** |
|---|---|---|---|---|---|
| **Board 2 according to the present invention** | 814 | 7.4 | 790 | 4.4 | 37.1 |

Compared to the Example 2, the sample of Example 3 reaches same properties but at a much lower density; the advantages are evident.

### Example 4: (not according to the invention)

Composite board for passive fire protection based upon gypsum and hydrated calcium silicate according to the present invention using combined additions of plaster and cement as binder Boards were made using the same xonotlite slurry as described in Example 2, but 20% of the plaster was replaced by equal amount of OPC CEM I cement supplied by CBR Cement. The mixture was processed as described in the previous examples to form boards with the properties listed below in Table 6.

By addition of the cement, thermal shrinkage is remarkably reduced compared to the samples without cement (Examples 2-3).

**Table 6**

| | **Density (kg/m³)** | **Bending strength (MPa)** | **Bending energy (J/m²)** | **Thermal shrinkage at 950°C (length) (%)** | **Rf-value in partition conditions for 20mm slab (min.)** |
|---|---|---|---|---|---|
| **Board 3** | 880 | 7.1 | 705 | 3.1 | 37.2 |

## Claims

1. A building material composition comprising
a. 10-95 wt. % of a binder composed of plaster
b. 0.5- 85 wt.% of porous, approximately spherical, hydrated calcium silicate aggregates homogeneously dispersed in the binder matrix,
i. said calcium silicate aggregates having an internal part in which the crystals are loosely entangled and an external layer in which the crystals are entangled more tightly than in the internal part,
ii. said calcium silicate aggregates being obtained by hydrothermal synthesis in a stirred medium using an aqueous lime and silica suspension wherein said lime and silica suspension is obtained in the presence of 0.1 to 2% by weight of sulfate with respect to total weight of lime and silica used in the production of said calcium silicate aggregates and in the presence of 0.1 to 2 % by weight of alkali hydroxides with respect to total weight of lime and silica used in the production of said calcium silicate aggregates,
c. fibers,
d. 0.1-5 wt% of functional additives from which 0.1 to 1 wt% are cellulose ether
e. optionally functional fillers,
f. balanced amount of water wherein the water/ solid ratio is between 0.55 and 20 and wherein the wt% are relative to the total weight of the composition.

2. A building material composition according to claim 1 wherein the binder constitutes 50 to 90% by weight of total composition.

3. A building material composition according to any one of claim 1 to 2 wherein the gypsum is selected from the group consisting of natural gypsum, synthetic gypsum, or a combination thereof.

4. A building material composition according to any one of claims 1 to 3 wherein said calcium silicate aggregates have a mean diameter of between 20 and 150 micrometers.

5. A building material composition according to any one of claims 1 to 4 wherein the hydrated calcium silicate aggregates are composed of xonotlite crystals, tobermorite crystals or mixtures thereof.

6. A building material composition according to any one of claims 1 to 5 wherein said sulfate is chosen from the group consisting of calcium sulfate, magnesium sulfate or a mixture thereof.

7. A building material composition according to any one of claims 1 to 6 wherein said alkali hydroxide is chosen from the group consisting of lithium hydroxide, sodium hydroxide, potassium hydroxide, or a mixture thereof.

8. A building material composition according to any one of claims 1 to 7 wherein said fibers are chosen from glass fibers including alkali-resistant glass fibers, cellulose fibers, synthetic fibers or mixtures thereof.

9. A building material composition according to any one of claims 1 to 8 wherein the functional additives are selected from the group consisting of ethyl cellulose, methyl cellulose, starch, foaming agent, air entrainer, water repellent, or any combination thereof, preferably in an amount of 0.1 to 5 wt% of total composition.

10. A building material composition according to any one of claims 1 to 9 wherein the functional fillers are endothermic materials such as aluminium hydroxide, magnesium hydroxide, calcium hydroxide, ettringite and their corresponding carbonates;
light weight fillers such as expanded perlite, exfoliated vermiculite, expanded clay, foamed glass, pumice, hollow ceramic sphere of fly ashes from power plant, or combination thereof.

11. A process for manufacturing a building material comprising the steps of preparation, shaping, setting, drying and finishing of an hydraulic setting composition as defined in any one of claims 1 to 10.

12. A product manufactured according to claim 11, being provided with facers on one or both surfaces, wherein the facer material is preferably selected from the group consisting of cellulose fiber, glass fiber, synthetic fiber, metal fiber of a combination thereof.

## Patentansprüche

1. Eine Baustoffzusammensetzung, umfassend:
a. 10-95 Gew.-% eines Bindemittels aus Gips;
b. 0,5-85 Gew.-% poröse, annähernd kugelförmige, hydratisierte Calciumsilicataggregate, die homogen in der Bindemittelmatrix dispergiert sind, wobei:
i. die Calciumsilicataggregate einen inneren Bereich mit locker verknäuelten Kristallen und eine äußere Schicht mit dichter verknäuelten Kristallen aufweisen;
ii. die Calciumsilicataggregate durch Hydrothermalsynthese in einem gerührten Medium unter Verwendung einer wässrigen Kalk- und Kieselsäuresuspension hergestellt werden, wobei die Kalk- und Kieselsäuresuspension 0,1 bis 2 Gew.-% Sulfat, bezogen auf das Gesamtgewicht des bei der Herstellung der Calciumsilicataggregate verwendeten Kalks und Kieselsäures, und 0,1 bis 2 Gew.-% Alkalihydroxide, bezogen auf das Gesamtgewicht des bei der Herstellung der Calciumsilicataggregate verwendeten Kalks und Kieselsäures, enthält;
c. Fasern;
d. 0,1-5 Gew.-% funktionelle Additive, davon 0,1-1 Gew.-% Celluloseether
e. gegebenenfalls funktionelle Füllstoffe,
f. eine ausgewogene Menge Wasser, wobei das Wasser-Feststoff-Verhältnis zwischen 0,55 und 20 liegt und die Gew.-%-Angaben sich auf das Gesamtgewicht der Zusammensetzung beziehen.

2. Eine Baustoffzusammensetzung nach Anspruch 1, wobei das Bindemittel 50 bis 90 Gew.-% der Gesamtzusammensetzung ausmacht.

3. Eine Baustoffzusammensetzung nach einem der Ansprüche 1 oder 2, wobei der Gips ausgewählt ist aus Naturgips, synthetischem Gips oder einer Kombination davon.

4. Eine Baustoffzusammensetzung nach einem der Ansprüche 1 bis 3, wobei die Calciumsilicataggregate einen mittleren Durchmesser zwischen 20 und 150 Mikrometern aufweisen.

5. Eine Baustoffzusammensetzung nach einem der Ansprüche 1 bis 4, wobei die hydratisierten Calciumsilicataggregate aus Xonotlitkristallen, Tobermoritkristallen oder Mischungen davon bestehen.

6. Eine Baustoffzusammensetzung nach einem der Ansprüche 1 bis 5, wobei das Sulfat ausgewählt ist aus Calciumsulfat, Magnesiumsulfat oder einer Mischung davon.

7. Eine Baustoffzusammensetzung nach einem der Ansprüche 1 bis 6, wobei das Alkalihydroxid ausgewählt ist aus der Gruppe bestehend aus Lithiumhydroxid, Natriumhydroxid, Kaliumhydroxid oder einer Mischung davon.

8. Eine Baustoffzusammensetzung nach einem der Ansprüche 1 bis 7, wobei die Fasern ausgewählt sind aus Glasfasern, einschließlich alkalibeständiger Glasfasern, Zellulosefasern, synthetischen Fasern oder Mischungen davon.

9. Eine Baustoffzusammensetzung nach einem der Ansprüche 1 bis 8, wobei die funktionellen Additive ausgewählt sind aus der Gruppe bestehend aus Ethylcellulose, Methylcellulose, Stärke, Treibmittel, Luftporenbildner, wasserabweisendem Mittel oder einer beliebigen Kombination davon, vorzugsweise in einer Menge von 0,1 bis 5 Gew.-% der Gesamtzusammensetzung.

10. Eine Baustoffzusammensetzung nach einem der Ansprüche 1 bis 9, wobei die funktionellen Füllstoffe endotherme Materialien wie Aluminiumhydroxid, Magnesiumhydroxid, Calciumhydroxid, Ettringit und deren entsprechende Carbonate sind; Leichtbaustoffe wie expandiertes Perlit, exfoliertes Vermiculit, Blähton, Schaumglas, Bimsstein, Hohlkeramikkugeln aus Kraftwerksflugasche oder eine Kombination davon.

11. Ein Verfahren zur Herstellung eines Baustoffs, umfassend die Schritte Vorbereiten, Formen, Abbinden, Trocknen und Endbearbeitung einer hydraulisch abbindenden Zusammensetzung nach einem der Ansprüche 1 bis 10.

12. Ein nach Anspruch 11 hergestelltes Produkt, das auf einer oder beiden Oberflächen mit Deckschichten versehen ist, wobei das Deckschichtmaterial vorzugsweise aus Zellulosefasern, Glasfasern, synthetischen Fasern, Metallfasern oder einer Kombination davon ausgewählt ist.

## Revendications

1. Composition de matériau de construction comprenant :
a. 10 à 95 % en poids d'un liant composé de plâtre ;
b. 0,5 à 85 % en poids d'agrégats de silicate de calcium hydratés, poreux et approximativement sphériques, dispersés de manière homogène dans la matrice du liant ;
i. lesdits agrégats de silicate de calcium présentant une partie interne où les cristaux sont faiblement enchevêtrés et une couche externe où les cristaux sont plus fortement enchevêtrés que dans la partie interne ;
ii. lesdits agrégats de silicate de calcium étant obtenus par synthèse hydrothermale en milieu agité, à partir d'une suspension aqueuse de chaux et de silice, ladite suspension étant obtenue en présence de 0,1 à 2 % en poids de sulfate par rapport au poids total de chaux et de silice utilisées pour la production desdits agrégats de silicate de calcium, et en présence de 0,1 à 2 % en poids d'hydroxydes alcalins par rapport au poids total de chaux et de silice utilisées pour la production desdits agrégats de silicate de calcium ;
c. des fibres ;
d. 0,1 à 5 % en poids d'additifs fonctionnels, dont 0,1 à 1 % en poids d'éther de cellulose.
e. Charges fonctionnelles (optionnelles).
f. Quantité appropriée d'eau, le rapport eau/solide étant compris entre 0,55 et 20, les pourcentages en poids étant relatifs au poids total de la composition.

2. Composition de matériau de construction selon la revendication 1, dans laquelle le liant représente de 50 à 90 % en poids de la composition totale.

3. Composition de matériau de construction selon l'une quelconque des revendications 1 à 2, dans laquelle le gypse est choisi parmi le gypse naturel, le gypse synthétique ou un mélange des deux.

4. Composition de matériau de construction selon l'une quelconque des revendications 1 à 3, dans laquelle lesdits agrégats de silicate de calcium ont un diamètre moyen compris entre 20 et 150 micromètres.

5. Composition de matériau de construction selon l'une quelconque des revendications 1 à 4, dans laquelle les agrégats de silicate de calcium hydratés sont composés de cristaux de xonotlite, de cristaux de tobermorite ou de mélanges de ceux-ci.

6. Composition de matériau de construction selon l'une quelconque des revendications 1 à 5, dans laquelle ledit sulfate est choisi parmi le sulfate de calcium, le sulfate de magnésium ou un mélange des deux.

7. Composition de matériau de construction selon l'une quelconque des revendications 1 à 6, dans laquelle l'hydroxyde alcalin est choisi parmi l'hydroxyde de lithium, l'hydroxyde de sodium, l'hydroxyde de potassium ou un mélange de ceux-ci.

8. Composition de matériau de construction selon l'une quelconque des revendications 1 à 7, dans laquelle les fibres sont choisies parmi les fibres de verre, y compris les fibres de verre résistantes aux alcalis, les fibres de cellulose, les fibres synthétiques ou leurs mélanges.

9. Composition de matériau de construction selon l'une quelconque des revendications 1 à 8, dans laquelle les additifs fonctionnels sont choisis parmi l'éthylcellulose, la méthylcellulose, l'amidon, un agent moussant, un entraîneur d'air, un hydrofuge ou toute combinaison de ceux-ci, de préférence en une quantité de 0,1 à 5 % en poids de la composition totale.

10. Composition de matériau de construction selon l'une quelconque des revendications 1 à 9, dans laquelle les charges fonctionnelles sont des matériaux endothermiques tels que l'hydroxyde d'aluminium, l'hydroxyde de magnésium, l'hydroxyde de calcium, l'ettringite et leurs carbonates correspondants ; des charges légères telles que la perlite expansée, la vermiculite exfoliée, l'argile expansée, le verre cellulaire, la pierre ponce, des sphères céramiques creuses de cendres volantes de centrale électrique, ou une combinaison de celles-ci.

11. Procédé de fabrication d'un matériau de construction comprenant les étapes de préparation, de mise en forme, de prise, de séchage et de finition d'une composition à prise hydraulique telle que définie dans l'une quelconque des revendications 1 à 10.

12. Produit fabriqué selon la revendication 11, présentant un revêtement sur une ou deux faces, le matériau de revêtement étant de préférence choisi parmi les fibres de cellulose, les fibres de verre, les fibres synthétiques, les fibres métalliques ou une combinaison de celles-ci.
